# EUROPEAN PATENT SPECIFICATION

(11) **EP 0 421 071 B1**
(45) Date of publication and mention of the grant of the patent: **05.01.1994**
(21) Application number: 90114091.3
(22) Date of filing: 23.07.1990
(51) Int. Cl.: G02B 6/38

(54) **Fiber optic splice assembly**
Faseroptische Spleisseinheit
Ensemble de connexion à fibre optique

(30) Priority: 02.10.1989 US 415684
(43) Date of publication of application: 10.04.1991
(73) Proprietor: GTE CONTROL DEVICES OF PUERTO RICO INCORPORATED, Wilmington, Delaware 19801 (US)
(72) Inventor: Barlow, Robert W., Canton, PA 17724 (US); Lynch, Thomas M., Williamsport, PA 17701 (US); Swanson, Steven E., Williamsport, PA 17701 (US)
(74) Representative: Grünecker, Kinkeldey, Stockmair & Schwanhäusser Anwaltssozietät

(56) References cited:
- WO-A-80/02328
- US-A- 4 676 589
- US-A- 4 822 131
- US-A- 4 824 198

## Description

This invention relates to fiber optic splice assemblies in accordance with the generic clauses of claim 1 and 6. More particularly, it relates to such splice assemblies which are reuseable and which hold mated fibers in position without the agency of any additional bonding material. Further, it relates to splice assemblies which are adaptable to different sizes of fibers and are easy to assemble.

The joining of optical fibers for use in transmission lines frequently requires the use of a splice. Common techniques employed in the industry include mechanical splices as exemplified in U. S. Pat. Nos. 4,257,674; 4,832,440; and 4,824,198 all being assigned to the assignee of the instant invention; 4,818,055; 4,818,058; 4,818,059; 4,818,061; 4,707,068; 4,548,467; 4,573,760; 4,755,018; 4,787,701; fusion splicing, which literally involves melting the fibers to be joined together until they fuse, as shown, e.g., in U. S. Pat. No.4,118,618; and connectorization, as shown, e.g., in the following U.S. patents: 3,579,316; 3,734,594; 3,825,319; 3,861,781; 3,870,395; 3,919,037; 3,944,328; 4,061,416; 4,107,242; 4,166,668; 4,186,998; 4,787,704. Also known are commercially available connectors such as the FC; BICONIC; SMA 905 and 906; ST*; D4; and FC-PC. (*Note; ST is a registered trademark of AT&T).

The typical mechanical splice is not reuseable since its employment requires that the fiber be cemented therein, usually by the use of an optical adhesive. Fusion splicing is expensive and time consuming and is generally not suited for emergency field use. The connector approach is well-suited for joining fibers to equipment which has mating terminals but is also not suited for emergency repairs. The remateable splice shown in Pat. 4,787,704 is complex and expensive, and the remateable splice shown in application S.N. 07/305,350, which is assigned to the assignee of the present invention, requires the use of set screws and, thus, a screw driver. Other types, such as those shown in the above-recited '055 patent, apply uneven compressive forces to the fibers and, further, require that both fibers be spliced simultaneously.

Document US-A-4 824 198 discloses a fiber optic splice assembly comprising a hermaphroditic splice housing comprised of mating housing halves. Each of the halves provides a first cavity for a ferrule crimp and both of the halves, when mated, define a second cavity for an elastomeric splice. The splice includes a metallic sleeve and an elastomeric insert, the insert preferably offers an opening having a trianglular cross-section. The ferrule crimps, one is provided for each of the two fibers to be spliced, also include an elastomeric insert and a ferrule crimped about the insert. The inset assumes a configuration dictated by the particular optical fiber cable configuration encountered. The housing halves are characterized by substantially indentical contours and are therefore, interchangeable. The housing halves contain a locking portion comprised of an integumentary layer with circumferential slots and an interior layer with mating locking flanges.

Also document US-A-4 822 131 discloses a hermaphroditic housing for a fiber optical splice based on the same solution principle as US-A-4 824 198.

It is, therefore, an object of this invention to obviate the disadvantages of the prior art.

It is another object of the invention to enhance fiber optic splices.

Yet another object of the invention is the provision of a reuseable splice.

Still another object of the invention is the provision of a splicing system which will accommodate differences in fiber sizes.

Yet another object of the invention is the provision of a fiber optic splice that applies even pressure thereto in a radial manner.

An additional object includes a splice having provision for applying pressure on both the bare glass and the buffer coating of an optic fiber.

Yet another object is the provision of a remateable splice wherein one fiber at a time may be fixed in position.

These objects are accomplished, by the characterising features of claim 1 and 6.

Thus, there is provided a splice assembly which is simple to use, especially in closed environments such as the confines of a man-hole. It is reuseable and applies pressure to the fiber in a very even, circumferential manner. Further, the pressure is applied both to the fiber and its buffer coating.

In order to accomodate optical fibers having similar or distinctly different buffered coating sizes, a system in accordance with claim 10 can be used.
Fig. 1 is an elevational view of a first optical fiber which can be utilized with the invention;
Fig. 2 is an elevational view of a second optical fiber which can be utilized with the invention;
Fig. 3 is an elevational, cross-sectional view of a splice assembly included to aid understanding of the invention;
Fig.4 is a perspective view of one half of the assembly of Fig. 3;
Fig. 5 is a partial, elevational, sectional view taken along the line 5-5 of Fig. 4;
Fig. 6 is a sectional view taken along the line 6-6 of Fig. 3;
Fig. 7 is a perspective view of one half of an alternate assembly;
Fig. 8 is a similar view of an accompanying half for use with the half of Fig. 7;
Fig. 9 is a sectional view taken along the line 9-9 of Fig. 5; and
Fig. 10 is a sectional view similar to Fig. 6 showing an embodiment of the invention.

For a better understanding of the present invention, together with other and further objects, advantages and capabilities thereof, reference is made to the following disclosure and appended claims taken in conjunction with the above-described drawings.

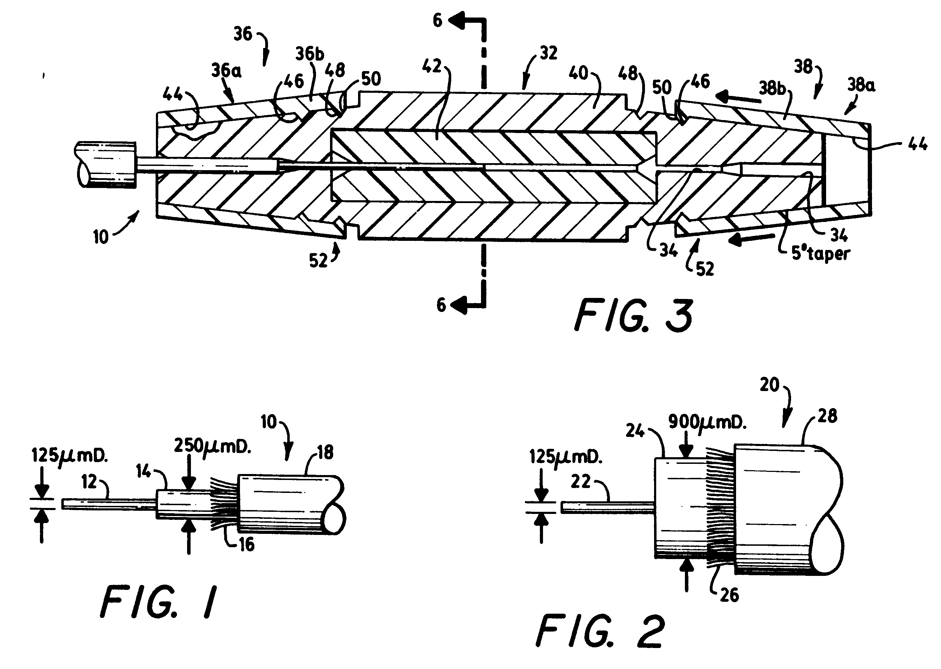

Referring now to the drawings with greater particularity, there is shown in Figs. 1 and 2 two of the more commonly used sizes of optical fiber. In Fig. 1 the optical fiber 10 has a transparent core 12 having a diameter of 125 um with a buffer coating 14 thereon which has a diameter of 250 um. A strength material 16, such as Kevlar, may overlie the buffer coating and an outside coating 18 can complete the package. The optical fiber 20 shown in Fig. 2 has a transparent core 22 having a diameter of 125 um, a buffer coating 24 having a diameter of 900 um, and a strength member 26, and outside coating 28. Thus, it will be seen that the major difference between the fibers 10 and 20, in so far as splicing them together is concerned, lies in the thickness of the buffer coating. The importance of this distinction will become apparent hereinafter.

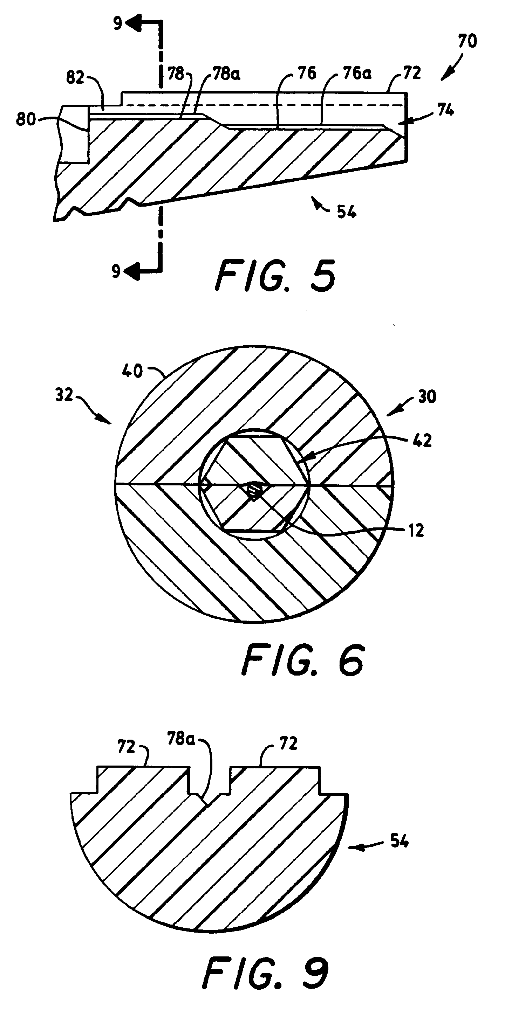

Referring now to Fig. 3 there is shown a fiber optic splice assembly 30 which comprises a longitudinal body 32 having an axial bore 34 therethrough. The body 32 has opposed ends 36 and 38 separated by and connected to a center portion 40 and preferably is made from a plastic material such as Vectra A625. Elastic means 42 is provided in a cavity 43 in the center portion and preferably comprises a pair of elastomeric halves as showm in U.S. Pat. No. 4,257,674, the teachings of which are hereby incorporated herein by reference. A cross-sectional view of the elastic means 42 is presented in Fig. 6.

Holding means 36a and 38a are associated with the ends 36 and 38 respectively, and cooperate therewith to apply radial, circumferential compression to the ends to retain fibers therein.

The ends 36, 38 are frusto-conical and the holdings means comprise end caps 36b, 38b which fit over the ends and which have a frusto-conical, internal bore 44. Each of the ends 36, 38, is provided with first and second annular, external grooves 46, 48 respectively which sequentially engage an annular, internal flange 50 formed on the leading edge 52 of the end caps and are preferably made from a plastic material such as Fluoromelt FP-EC-1004..

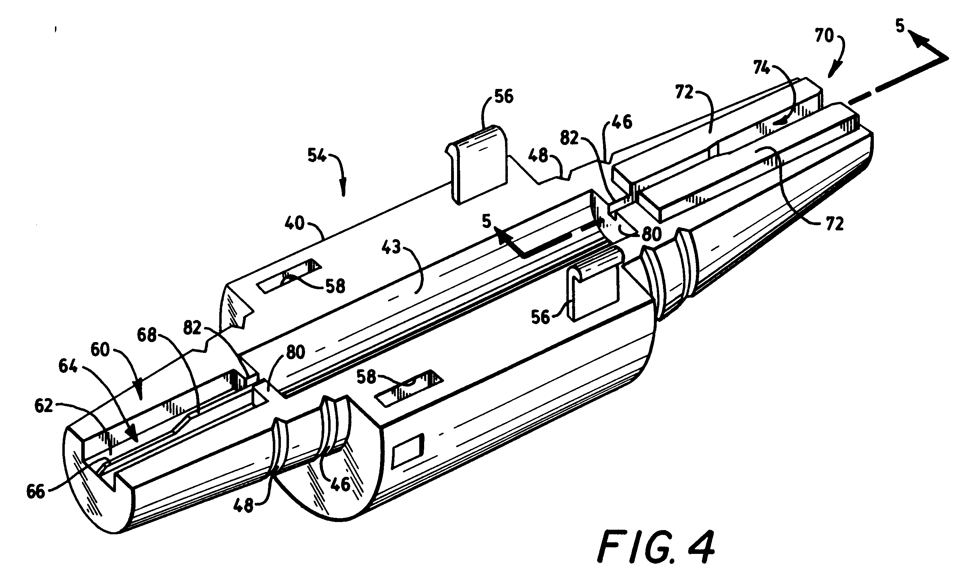

The body 32 is formed from longitudinal, hermaphroditic halves 54, such as is shown in Fig. 4. The halves 54 are provided with projecting latches 56 on one end of the center portion 40 and with receiving slots 58 on the other end of the center portion. A pair of halves, one being rotated 180 degrees with respect to the other, and having the latches of one half engaged with the slots of the other half, provides a preliminary assembly. An end cap 36b is fitted over end 36 and an end cap 38b is fitted over end 38, in each instance with the flange 50 engaged in first annular groove 46. In this configuration the end caps are retained on the ends in a manner to allow handling and shipping. It is this configuration that could be supplied to the customer. To use the splice assembly, the user would prepare an optical fiber leaving an appropriate length of bare fiber and and appropriate length of buffer coating and insert the terminal portions thereof into the splice assembly 30 until the respective fibers meet substantially in the middle of the assembly. To simplify this procedure, the end caps can be provided with a marked gauge to indicate the appropriate trim length. With the splice optimized, for example, by employing a local injection detection system, the end caps are pushed toward the center 40 until the flanges 50 engage the second annular grooves 48. In this position a constant, radial and circumferential compression is applied to the fiber and the buffer coating to consummate the splice. Fig. 3 illustrates an assembly wherein the left-hand side has an optical fiber inserted and end cap 36b in its final position, while the right-hand side has the end cap 38b still in its preliminary position with flange 50 in the first annular groove 46 and with no fiber yet in place.

Referring now to Figs. 4 and 5, the internal construction of the hermaphroditic halves 54 will be exemplified. One of the internal ends is provided with a female section 60 comprised of a rectangular slot 62 having centrally located therein a raised rib 64 having a first sector 66 and a second sector 68. The other end is provided with a male section 70 comprised of a pair of raised pads 72 defining therebetween a gap 74. The bottom of the gap (see Fig. 5) has a first sector 76 and a second sector 78, both of which are provided with a V groove 76a and 78a for receiving a fiber. The rib 64 has a flat surface for engaging the fiber, thus providing a receptacle similar to that shown in Pat. No. 4,257,674.

When two halves 54 are joined together the pads 72 fit within the rectangular slot 62 and the oppositely disposed rib 64 and bottom of gap 74 with its V groove, define therebetween the axial bore 32 for receiving the optical fiber; i.e., the buffer coating is received between 66 and 76 and the core 12 is received between 68 and 78. End walls 80 are each provided with a slot 82 for receiving the core 12 and leading it into elastic means 42.

As will be appreciated when dealing with hermaphroditic halves, each pair will receive a single size fiber. Thus, when one is working with fibers 10 and fibers 20, two specific designs will be necessary; however, the only difference between the two modifications will be in the dimensions of the gap 74 and the width of rib 66, which will have to accommodate the different sizes of the buffer coatings.

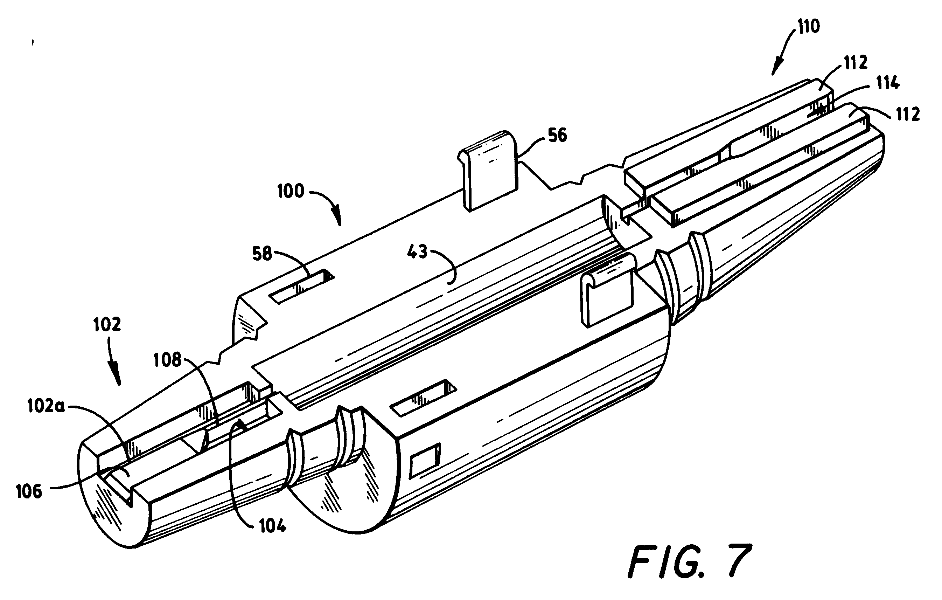

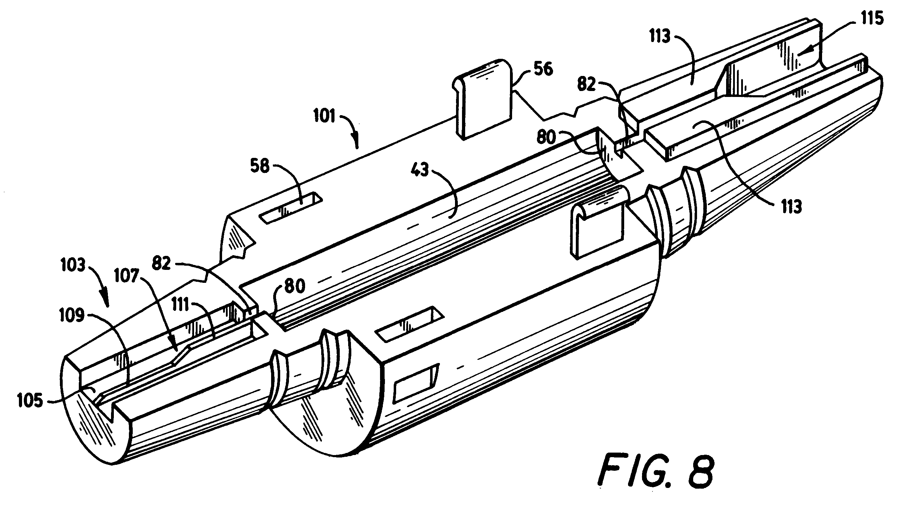

In order to provide a system that is all inclusive, i.e., a single system that will also allow the mating of a fiber 10 to a fiber 20, it is necessary to provide an additional pair of body halves that are not hermaphroditic. These halves are shown in Figs. 7 and 8. A first of these halves, 100, has a large internal female end 102 comprising a rectangular slot 102a having an upstanding, centrally located rib 104 therein. The rib is provided with a first sector 106 and a second sector 108. The second sector 108 is identical to sector 68; however, sector 106 is much wider to accommodate the larger diameter buffer coating of fiber 20.

The opposite end is provided with a small internal male configuration 110 having raised pads 112 defining a gap 114 therebetween. The bottom of the gap 114 is the same as the bottom of gap 74, since it designed to take a fiber 10.

The mating half 101 shown in Fig. 8 has a small internal female end 103 having a rectangular slot 105 with a raised rib 107 which includes sectors 109 and 111. The opposite end is provided with a large internal male end comprised of pads 113 defining a gap 115 therebetween. The bottom of the gap is configured to receive a fiber 20; i.e., it looks like the reverse of rib 104, including the appropriately dimensioned V groove.

Accordingly, upon assembly of half 100 with half 101, the latches 56 engage respective slots 58 and pads 113 of half 101 enter rectangular slot 102a of half 100. Likewise, pads 112 enter rectangular slot 105. Pads 112 and. slot 105 thus form the receiving port for a fiber 10, while pads 113 and slot 102a form the receiving port for fiber 20. Of course, before the halves are joined together, the elastic means 12 are placed in cavity 43, with an appropriate index matching gel therebetween.

This system of splicing assemblies provides simplified manufacture and construction. No crimps are required to maintain the splice, thus, it is reuseable. The optical throughput can be verified and optimized, for example, by utilizing a local injection detection system. No adhesives are required and reliable field assembly is achievable without special fixtures or tools. Further, the splice can be accomplished one fiber at a time.

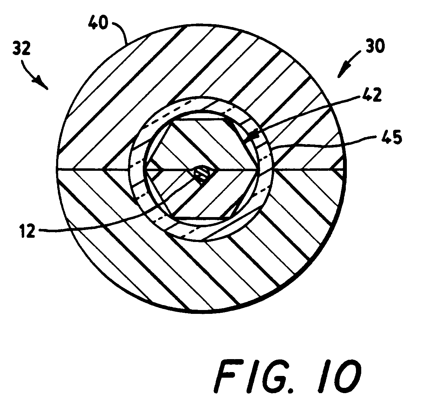

In an embodiment of the invention (see Fig. 10), the cavity 43 is be enlarged to accept a hollow sleeve 45 which can have the elastic means 42 mounted therein. The fiber receiving groove in the elastic means can be provided with a suitable index matching gel. Employment of the hollow sleeve, which can be glass, greatly simplifies the assembly of the splice. Enclosing the elastic means in a hollow sleeve is shown in the afore-mentioned U.S. Pat. No. 4,257,674.

While there have been shown what are at present considered to be the preferred embodiments of the invention, it will be apparent to those skilled in the art that various changes and modifications can be made herein without departing from the scope of the invention as defined by the appended claims.

## Claims

1. A fiber optic splice assembly for splicing optical fibers (10,20), said fibers (10,20) having a transparent core (12,22) with a buffer coating (14,24) thereon, said assembly comprising:
a longitudinal body (32) having an axial bore (34) therethrough and said bore having opposed ends (36,38) separated by and connected to a center portion (40), one fiber (10,20) entering said body (32) from each of said ends (36,38),
**characterized by**
a hollow sleeve (45) which fits into a complementary enlarged central section of said bore and having elastic means (42) mounted in said hollow sleeve (45) for receiving the transparent cores (12,22) of two fibers (10,20) which have had a portion of their buffer (14,24) coating removed;
mating means (60,70,102,103,110) formed on the internal surface of said bore at said ends (36,38) for receiving a portion of the fibers having a buffer coating thereon; and
holding means (36a,38a) cooperating with said ends for applying substantially uniform radial compression around the outside surface of said ends (36,38) of the longitudinal body, so that the receiving means can be compressed onto the buffer coatings thereby to grip and retain the fibers within the assembly.

2. The fiber optic splice assembly of claim 1, wherein the outside surface of the opposite ends (36,38) of said longitudinal body (32) are frusto-conical and said holding means comprise end caps (36b,38b) which fit over said ends, said end caps having a corresponding internal bore (44) which is frusto-conical.

3. The fiber optic splice assembly of claim 2, wherein each of said ends (36,38) is provided with a first and second annular external groove (46,48) and said end caps (36b,38b) are each provided with an annular, internal ridge (50) formed to sequentially engage said first groove (46) in a non-pressure applying manner and said second groove (48) in a radial pressure supply mode.

4. The fiber optic splice assembly of claim 1, wherein said longitudinal body (32) is comprised of two longitudinal halves (54,100,101).

5. The fiber optic splice assembly of claim 4, wherein said longitudinal halves (54,100,101) have surfaces that enable the two halves to be fitted together to form said longitudinal body (32).

6. A fiber optic splice assembly for splicing optical fibers (10,20), said fibers (10,20) having a transparent core (12,22) with a buffer coating (14,24) thereon, said assembly comprising:
a longitudinal body (32) having an axial bore (34) therethrough and having opposed ends (36,38) separated by and connected to a center portion (40);
one fiber (10,20) entering said body (32) from each of said ends (36,38),
**characterized by**
a hollow sleeve (45) which fits into a complementary enlarged central section of said bore and having elastic means (42) mounted in said hollow sleeve (45) for receiving the transparent cores (12,22) of two fibers (10,20) which have had a portion of their buffer coating (14,24) removed,
said body (32) comprising longitudinal halves (54,100,101), whereby said longitudinal halves form the axial bore (34) when assembled together,
means (60,70,102,103,110) formed on the internal surface of said bore at said ends of the axial bore (34) of said longitudinal halves (54,100,101) for receiving a portion of the fibers having a buffer coating thereon;
whereby the opposite ends of the bore each have a slot (62,105) formed in one of said halves (54,100,101) and a projection (66,68,109,111) formed on the other of said halves the projection fitting into a slot at each end to form the means (60,70,102,110,103) for receiving the portions of the fibers having a buffered coating; and
holding means (36a,38a) cooperating with said ends for applying substantially uniform radial compression around the outside surface of said ends (36,38) of the longitudinal body, so that the receiving means can be radially compressed onto the buffer coatings thereby to grip and retain the fibers within the assembly.

7. The fiber optic splice assembly of claim 6, wherein said slot (62,105) is quadrangular in cross-section.

8. The fiber optic splice assembly of claim 7, wherein the outside surface of the opposite ends (36,38) of the longitudinal body (32) are frusto-conical and said holding means comprise end caps (36b,38b) which fit over said ends, said end caps having a corresponding internal bore which is frusto-conical.

9. The fiber optic splice assembly of claim 8, wherein each of said ends (36,38) is provided with a first and second annular external groove (46,48) and said end caps (36b,38b) are each provided with an annular, internal ridge (50) formed to sequentially engage said first groove (46) in a non-pressure applying manner and said second groove (48) in a radial pressure supply mode.

10. A fiber optic splicing system for accommodating optical fibers (10,20) having similar or distinctly different buffered coating sizes, said system comprising:
a first pair of housing halves (54,100,101) forming a body (32) having an axial bore with opposed ends adapted to receive two optical fibers (10,20) of a first similar size;
a second pair of housing halves (54,100,101) forming a body (32) having an axial bore with opposed ends having means to receive two optical fibers (10,20) of a second similar size, different from said first size;
a third pair of housing halves (54,100,101) forming a body having an axial bore having one end formed to receive one of said first size optical fiber (10,20) and another end formed to receive one of said second, different size of optical fiber, each of said housing halves including a center portion (40) having a semi-cylindrical trough therein, said semi-cylindrical troughs forming a cylindrical cavity when two of said halves are mated; and a hollow sleeve (45) for inclusion within said cylindrical cavity, said hollow sleeve (45) containing elastic means (42) for receiving and holding fibers inserted thereinto; and said bodies (32) formed from said housing halves (54,100,101) include holding means (36a,38a) cooperating with said ends for applying substantial uniform radial compression on the outside surface ends (36,38) of the longitudinal body, so that the receiving means can be radially compressed onto the buffer coatings thereby to grip and retain the fibers within the assembly.

11. The fiber optic splicing system of claim 10, wherein the outside surface of the opposite ends (36,38) of the longitudinal body (32) are frusto-conical and said holding means comprise end caps (36b,38b) which fit over said ends, said end caps (36b,38b) having a corresponding internal bore (44) which is frusto-conical.

12. The fiber optic splicing system of claim 11, wherein each of said ends (36,38) is provided with a first and second annular external groove (46,48) and said end caps (36b,38b) are each provided with an annular, internal ridge (50) formed to sequentially engage said first groove (46) in a non-pressure applying manner and said second groove (48) in a radial pressure supply mode.

13. The fiber optic splicing system of claim 12, wherein said bodies (32) are comprised of two longitudinal halves (54,100,101).

14. The fiber optic splicing system of claim 13, wherein at least some of said longitudinal halves (54,100,101) have hermaphroditic surfaces that enable the two halves to be fitted together to form said longitudinal body (32).

## Patentansprüche

1. Eine faseroptische Spleißvorrichtung, zum Spleißen optischer Fasern (10, 20) wobei die Fasern eine durchsichtige Ader (12, 22) mit einer Ummantelung (14, 24) darüber aufweisen, und wobei die Vorrichtung umfaßt:
einen länglichen Körper (32), durch welchen ein axialer Hohlraum geht, wobei der Hohlraum gegenüberliegende Enden (36, 38), die durch einen Zentralbereich (40) getrennt und verbunden sind, aufweist, und wobei eine Faser in den Körper (32) von jedem der Enden (36, 38) aus eintritt,
**gekennzeichnet durch**
eine hohle Hülse (45), die in einen komplementär ausgeweiteten Zentralbereich des Hohlraums paßt und eine elastische Einrichtung (42) aufweist, die in der hohlen Hülse (45) befestigt ist, um die transparenten Adern (12, 22) von zwei Fasern (10, 20) aufzunehmen, bei welchen ein Teil der Ummantelung (14, 24) entfernt wurde,
eine Einrichtung (60, 70, 102, 103, 110), die auf der inneren Oberfläche des Hohlraums an den Enden (36, 38) angebracht ist, um einen Teil der Fasern aufzunehmen, die eine Ummantelung um sich herum aufweisen; und
eine Halteeinrichtung (36a, 38a), die mit den Enden zusammenwirkt, um eine im wesentlichen gleichförmige radiale Kompression um die Außenseitenoberfläche der Enden (36, 38) des länglichen Körpers auszuüben, so daß die Aufnahmeeinrichtung auf die Ummantelungen gedrückt werden kann, um somit die Fasern in der Vorrichtung zu greifen und festzuhalten.

2. Faseroptische Spleißvorrichtung nach Anspruch 1, wobei die Außenseitenoberfläche der gegenüberliegenden Enden (36, 38) des länglichen Körpers (32) kegelstumpfförmig ausgebildet ist und die Halteeinrichtung Endkappen (36b, 38b) umfaßt, welche über die Enden passen, wobei die Endkappen einen entsprechenden inneren Hohlraum (44) aufweisen, der kegelstumpfförmig ist.

3. Faseroptische Spleißvorrichtung nach Anspruch 2, wobei jedes der Enden (36, 38) mit einer ersten und einer zweiten ringförmigen, äußeren Nut (46, 48) versehen ist, und die Endkappen (36b, 38b) jeweils mit einer ringförmigen, inneren Erhöhung '(50) versehen sind, die so ausgebildet ist, um nacheinander mit der ersten Nut (46), ohne Druckausübung und mit der zweiten Nut (48) unter Ausübung eines radialen Drucks, in Eingriff zu kommen.

4. Faseroptische Spleißvorrichtung nach Anspruch 1, wobei der längliche Körper (32) zwei längliche Hälften (54, 100, 101) umfaßt.

5. Faseroptische Spleißvorrichtung nach Anspruch 4, wobei die länglichen Hälften (54, 100, 101) Oberflächen aufweisen, die den zwei Hälften erlauben zusammengesetzt zu werden, um so den länglichen Körper (32) zu bilden.

6. Faseroptische Spleißvorrichtung zum Spleißen optischer Fasern (10, 20), wobei die Fasern (10, 20) eine durchsichtige Ader (12, 22) mit einer Ummantelung (14, 24) darüber aufweisen, wobei die Vorrichtung umfaßt:
einen länglichen Körper (32), durch welchen ein axialer Hohlraum (34) geht, und der gegenüberliegende Enden (36, 38) aufweist, die durch einen Zentralbereich (40) getrennt und verbunden sind;
eine Faser (10, 20), die in den Körper (32) von jedem der Enden (36, 38) eintritt, **gekennzeichnet durch**
eine hohle Hülse (45), die in einen komplementär ausgeweiteten Zentralbereich des Hohlraums paßt und eine elastische Einrichtung (42) aufweist, die in der hohlen Hülse (45) befestigt ist, um die transparenten Adern (12, 22) von zwei Fasern (10, 20) aufzunehmen, bei welchen ein Teil ihrer Ummantelung (14, 24) entfernt wurde;
wobei der Körper (32) längliche Hälften (54, 100, 101) umfaßt, und die länglichen Hälften den axialen Hohlraum (34) bilden, wenn sie zusammengesetzt werden,
eine Einrichtung (60, 70, 102, 103, 110), die auf der inneren Oberfläche des Hohlraums an den Enden des axialen Hohlraums (34) der länglichen Hälften (54, 100, 101) angebracht ist, um einen Teil der Fasern, die die Ummantelung um sich herum haben, aufzunehmen,
wobei die gegenüberliegenden Enden des Hohlraums jeweils einen Spalt (62, 105) aufweisen, der in eine der Hälften (54, 100, 101) ausgebildet ist und einen Vorsprung (66, 68, 109, 111), der auf die andere der Hälften ausgebildet ist, wobei der Vorsprung in den Spalt an jedem Ende paßt, um so die Einrichtung (60, 70, 102, 110, 103) zu bilden, die die Teile der Fasern, die eine Ummantelung aufweisen, aufnimmt; und
eine Halteeinrichtung (36a, 38a), die mit den Enden zusammenwirkt, um eine im wesentlichen gleichförmige, radiale Kompression um die Außenseitenoberfläche der Enden (36, 38) des länglichen Körpers auszuüben, so daß die Aufnahmeeinrichtung radial auf die Ummantelungen gedrückt werden kann, um somit die Fasern in der Vorrichtung zu greifen und festzuhalten.

7. Faseroptische Spleißvorrichtung nach Anspruch 6, wobei der Spalt (62, 105) einen quadratischen Querschnitt aufweist.

8. Faseroptische Spleißvorrichtung nach Anspruch 7, wobei die äußere Oberfläche der gegenüberliegenden Enden (36, 38) des länglichen Körpers (32) kegelstumpfförmig ausgebildet ist und die Halteeinrichtung Endkappen (36b, 38b) umfaßt, welche über die Enden passen, wobei die Endkappen einen entsprechenden inneren Hohlraum aufweisen, der kegelstumpfförmig ist.

9. Faseroptische Spleißvorrichtung nach Anspruch 8, wobei jedes der Enden (36, 38) mit einer ersten und zweiten ringförmigen, äußeren Nut (46, 48) versehen ist, und die Endkappen (36b, 38b) jeweils mit einer ringförmigen, inneren Erhöhung (50) versehen sind, die so ausgebildet ist, um nacheinander mit der ersten Nut (46) ohne Druckausübung und mit der zweiten Nut (48) unter Ausübung eines radialen Drucks in Eingriff zu kommen.

10. Faseroptisches Spleißsystem um optische Fasern (10, 20) aufzunehmen, die gleiche oder deutlich verschiedene Mantelgrößen aufweisen, wobei das System umfaßt:
ein erstes Paar Gehäusehälften (54, 100, 101), die einen Körper (32) bilden, der einen axialen Hohlraum mit gegenüberliegenden Enden aufweist, die angepaßt sind, um zwei optische Fasern (10, 20) einer ersten gleichen Größe aufzunehmen;
ein zweites Paar Gehäusehälften (54, 100, 101), die einen Körper (32) bilden, der einen axialen Hohlraum mit gegenüberliegenden Enden aufweist, der eine Einrichtung aufweist, um zwei optische Fasern (10, 20) einer zweiten gleichen Größe, die von der ersten Größe verschieden ist, aufzunehmen;
ein drittes Paar Gehäusehälften (54, 100, 101), die einen Körper formen, der einen axialen Hohlraum aufweist, der ein Ende hat, das so ausgebildet ist, um eine der optischen Fasern (10, 20) der ersten Größe aufzunehmen und ein anderes Ende, das so ausgebildet ist, um eine der zweiten optischen Fasern, die eine andere Größe aufweisen, aufzunehmen, wobei jede der Gehäusehälften einen Zentralbereich (40) einschließt, der eine halbzylindrische Mulde darin hat, wobei die halbzylindrischen Mulden eine zylindrische Ausnehmung bilden, wenn zwei der Hälften miteinander verbunden werden; und
eine hohle Hülse (45), die von der zylindrischen Ausnehmung aufgenommen wird, wobei die hohle Hülse (45), eine elastische Einrichtung (42) beinhaltet, um Fasern, die dort hinein eingeführt wurden, aufzunehmen und zu halten;
und die Körper (32), die von den Gehäusehälften (54, 100, 101) gebildet sind, eine Halteeinrichtung (36a, 38a) einschließen, die mit den Enden zusammenwirken, um eine im wesentlichen gleichmäßige radiale Kompression auf die äußeren Oberflächenenden (36, 38) des länglichen Körpers auszuüben, so daß die Aufnahmeeinrichtung radial auf die Ummantelung gedrückt werden kann, um die Fasern in der Vorrichtung zu greifen und festzuhalten.

11. Faseroptisches Spleißsystem nach Anspruch 10, wobei die äußere Oberfläche der gegenüberliegenden Enden (36, 38) des länglichen Körpers (32) kegelstumpfförmig ausgebildet ist, und die Halteeinrichtung Endkappen (36b, 38b) umfaßt, welche über die Enden passen, wobei die Endkappen (36b, 38b) einen entsprechenden inneren Hohlraum (44) aufweisen, der kegelstumpfförmig ist.

12. Faseroptisches Spleißsystem nach Anspruch 11, wobei jedes der Enden (36, 38) mit einer ersten und zweiten ringförmigen, äußeren Nut (46, 48) versehen ist, und die Endkappen (36b, 38b) jeweils mit einer ringförmigen, inneren Erhöhung (50) versehen sind, die so ausgebildet ist, um nacheinander mit der ersten Nut ohne Druckausübung und mit der zweiten Nut (48) unter Ausübung eines radialen Drucks in Eingriff zu kommen.

13. Faseroptisches Spleißsystem nach Anspruch 12, wobei die Körper (32) zwei längliche Hälften (54, 100, 101) umfassen.

14. Faseroptisches Spleißsystem nach Anspruch 13, wobei zumindest einige der länglichen Hälften (54, 100, 101) hermaphrodite Oberflächen haben, die den zwei Hälften ermöglichen zusammengesetzt zu werden, um so den länglichen Körper (32) zu bilden.

## Revendications

1. Ensemble de jonction de fibres optiques pour connecter des fibres optiques (10, 20), le dites fibres (10, 20) ayant une âme transparente (12, 22) recouverte d'un revêtement-tampon (14, 24), le dit ensemble comprenant :
un corps longitudinal (32) percé d'un alésage axial, le dit alésage présentant des extrémités opposées (36, 38) séparées par et reliées à une partie centrale (40), une fibre (10, 20) pénétrant dans le dit corps (32) par chacune des dites extrémités (36, 38),
**caractérisé** **en ce que**
un manchon creux (45) qui se loge dans une section de contrôle élargie complémentaire du dit alésage et ayant un moyen élastique (42) disposé à l'intérieur du dit manchon creux (45) pour accueillir les âmes transparentes (12, 22) de deux fibres (10, 20) dont une partie de leur revêtement-tampon (14, 24) a été ôtée;
des moyens d'assemblage (60, 70, 102, 103, 110) formés sur la paroi interne du dit alésage aux dites extrémités (36, 38) pour accueillir une partie des fibres recouverte d'un revêtement-tampon; et
un moyen de maintien (36a, 38a) coopérant avec les dites extrémités pour appliquer une compression radiale substantiellement uniforme autour de la paroi extérieure des dites extremités (36, 38) du corps longitudinal, de telle manière que le moyen de réception puisse être compressé sur les revêtements-tampon de façon à mordre pour retenir les fibres à l'intérieur de l'ensemble.

2. Ensemble de jonction de fibres optiques selon la revendication 1 caractérisé en ce que la paroi extérieure des extrémités opposées (36, 38) du dit corps longitudinal (32) affecte une forme tronconique et que le dit moyen de maintien comprend des capuchons d'extrémité (36b, 38b) qui s'ajustent sur les dites extrémités, les dits capuchons d'extrémité présentant un alésage interne (44) qui est de forme tronconique.

3. Ensemble de jonction de fibres optiques selon la revendication 2 caractérisé en ce que chacune des dites extrémités (36, 38) présente des première et deuxième rainures externes (46, 48) et que chacun des dits capuchons d'extrémité (36b, 38b) est pourvu d'une saillie annulaire interne (50) formée pour séquentiellement pénétrer sans pression de la dite première rainure (46) et en mode de pression radiale avec la dite deuxième rainure (48).

4. Ensemble de jonction de fibres optiques selon la revendication 1 caractérisé en ce que le dit corps longitudinal (32) est constitué de deux moitiés longitudinales (54, 100, 101).

5. Ensemble de jonction de fibres optiques selon la revendication 4 caractérisé en ce que les dites moitiés longitudinales (54, 100, 101) présentent des surfaces qui permettent aux deux moitiés de s'adapter l'une à l'autre pour former le dit corps longitudinal (32).

6. Ensemble de jonction de fibres optiques pour connecter des fibres optiques (10, 20), le dites fibres (10, 20) ayant une âme transparente (12, 22) recouverte d'un revêtement-tampon (14, 24), le dit ensemble comprenant :
un corps longitudinal (32) percé d'un alésage axial (34) et présentant des extrémités opposées (36, 38) séparées par et reliées à une partie centrale (40);
une fibre (10, 20) pénétrant dans le dit corps (32) par chacune des dites extrémités (36, 38),
**caractérisé en ce que**
un manchon creux (45) qui se loge dans une section centrale élargie complémentaire du dit alésage et ayant un moyen élastique (42) disposé dans le dit manchon creux (45) pour accueillir les âmes transparentes (12, 22) de deux fibres (10, 20) dont une partie de leur revêtement-tampon (14, 24) a été ôtée;
le dit corps (32) comprenant des moitiés longitudinales (54, 100, 101), de telle manière que les dites moitiés longitudinales forment l'alésage axial (34) lorsqu'assemblées ensemble;
des moyens (60, 70, 102, 103, 110) formés sur la paroi interne du dit alésage aux dites extrémités du dit alésage axial (34) des dites moitiés longitudinales (54, 100, 101) pour accueillir une partie des fibres recouverte d'un revêtement-tampon;
de telle manière que les extrémités opposées de l'alésage présentent chacune une fente (62, 105) pratiquée dans l'une des dites moitiés (54, 100, 101) et une saillie (66, 68, 109, 111) formée sur l'autre des dites moitiés, la saillie coopérant avec une fente à chaque extrémité pour former les moyens (60, 70, 102, 110, 103) de réception des parties de fibres recouvertes d'un revêtement-tampon; et
un moyen de maintien (36a, 38a) coopérant avec les dites extrémités pour appliquer une compression radiale substantiellement uniforme autour de la paroi extérieure des dites extrémités (36, 38) du corps longitudinal, de telle manière que le moyen de réception puisse être radialement compressé sur les revêtements-tampon de façon à mordre pour retenir les fibres à l'intérieur de l'ensemble.

7. Ensemble de jonction de fibres optiques selon la revendication 6 caractérisé en ce que la dite fente (62, 105) est de forme quadrangulaire en coupe.

8. Ensemble de jonction de fibres optiques selon la revendication 7 caractérisé en ce que la paroi extérieure des extrémités opposées (36, 38) du corps longitudinal (32) affecte une forme tronconique et que le dit moyen de maintien comprend des capuchons d'extrémité (36b, 38b) qui s'ajustent sur les dites extrémités, les dits capuchons d'extrémité présentant un alésage interne correspondant qui est de forme tronconique.

9. Ensemble de jonction de fibres optiques selon la revendication 8 caractérisé en ce que chacune des dites extrémités (36, 38) présente des première et deuxième rainures externes (46, 48) et que chacun des dits capuchons d'extrémité (36b, 38b) est pourvu d'une saillie annulaire interne (50) formée pour séquentiellement pénétrer sans pression de la dite première rainure (46) et en mode de pression radiale avec la dite deuxième rainure (48).

10. Système de jonction de fibres optiques pour accueillir des fibres optiques (10, 20) présentant un revêtement-tampon de tailles similaires ou distinctes, le dit système comprenant :
une première paire de moitiés de boîtier (54, 100, 101) constituant un corps (32) présentant un alésage axial avec des extrémités opposées adaptées pour accueillir deux fibres optiques (10, 20) d'une première taille similaire;
une deuxième paire de moitiés de boîtier (54, 100, 101) constituant un corps (32) présentant un alésage axial avec des extrémités opposées comportant un moyen pour accueillir deux fibres optiques (10, 20) d'une deuxième taille similaire différente de la dite première taille;
une troisième paire de moitiés de boîtier (54, 100, 101) constituant un corps présentant un alésage axial avec une extrémité prévue pour accueillir une des dites fibres optiques (10, 20) de la dite première taille et une autre extrémité prévue pour accueillir une des dites fibres optiques de la dite deuxième taille différente, chacune des dites moitiés de boîtier comprenant une partie centrale (40) comportant à l'intérieur une rigole semi-cylindrique, les dites rigoles semi-cylindriques formant une cavité cylindrique lorsque deux des dites moitiés sont réunies; et un manchon creux (45) pour inclusion à l'intérieur de la dite cavité cylindrique, le dit manchon creux (45) contenant un moyen élastique (42) pour recevoir et maintenir des fibres introduites à l'intérieur; et les dits corps (32) formés à partir des dites moitiés de boîtier (54, 100, 101) comprennent un moyen de maintien (36a, 38a) coopérant avec les dites extrémités pour appliquer une compression radiale substantiellement uniforme sur les extrémités (36, 38) de la paroi extérieure du corps longitudinal, de telle manière que le moyen de réception puisse être radialement compressé sur les revêtements-tampon de façon à mordre pour retenir les fibres à l'intérieur de l'ensemble.

11. Système de jonction de fibres optiques selon la revendication 10 caractérisé en ce que la paroi extérieure des extrémités opposées (36, 38) du corps longitudinal (32) affecte une forme tronconique et que le dit moyen de maintien comprend des capuchons d'extrémité (36b, 38b) qui s'ajustent sur les dites extrémités, les dits capuchons d'extrémité présentant un alésage interne correspondant (44) qui est de forme tronconique.

12. Système de jonction de fibres optiques selon la revendication 11 caractérisé en ce que chacune des dites extrémités (36, 38) présente des première et deuxième rainures externes (46, 48) et que chacun des dits capuchons d'extrémité (36b, 38b) est pourvu d'une saillie annulaire interne (50) formée pour séquentiellement pénétrer sans pression de la dite première rainure (46) et en mode de pression radiale avec la dite deuxième rainure (48).

13. Système de jonction de fibres optiques selon la revendication 12 caractérisé en ce que les dits corps (32) sont constitués de deux moitiés longitudinales (54, 100, 101).

14. Système de jonction de fibres optiques selon la revendication 13 caractérisé en ce qu'au moins certaines des dites moitiés longitudinales (54, 100, 101) présentent des surfaces hermaphrodites qui permettent aux deux moitiés d'être réunies ensemble pour constituer le dit corps longitudinal (32).
